## Europäisches Patentamt

(19) **European Patent Office**

**Office européen des brevets**

(11) Veröffentlichungsnummer: **0 052 625**
**B1**

(12) # EUROPÄISCHE PATENTSCHRIFT

(45) Veröffentlichungstag der Patentschrift:
**12.09.84**

(51) Int. Cl.³: **F 16 H 15/50**

(21) Anmeldenummer: **81901320.2**

(22) Anmeldetag: **21.05.81**

(86) Internationale Anmeldenummer:
**PCT/AT 81/00011**

(87) Internationale Veröffentlichungsnummer:
**WO 81/03367 (26.11.81 Gazette 81/28)**

(54) **GETRIEBE ZUR STUFENLOS VERÄNDERBAREN ÜBERTRAGUNG EINER DREHBEWEGUNG ZWISCHEN ZWEI KOAXIALEN WELLEN.**

(30) Priorität: **23.05.80 PC /AT80/000 16**

(43) Veröffentlichungstag der Anmeldung:
**02.06.82 Patentblatt 82/22**

(45) Bekanntmachung des Hinweises auf die Patenterteilung:
**12.09.84 Patentblatt 84/37**

(84) Benannte Vertragsstaaten:
**AT CH DE FR GB LI NL SE**

(56) Entgegenhaltungen:
**WO - A - 80/02729**
**AT - B - 222 966**
**DE - A - 2 559 437**
**DE - B - 1 191 650**
**FR - A - 1 332 135**
**FR - A - 2 458 008**
**US - A - 546 249**
**US - A - 2 068 784**
**US - A - 2 831 373**
**US - A - 3 020 782**
**US - A - 3 396 591**

(73) Patentinhaber: **FALKNER, Raimund, A-6426 Roppen Nr. 64 (AT)**

(72) Erfinder: **FALKNER, Raimund, A-6426 Roppen Nr. 64 (AT)**

(74) Vertreter: **Torggler, Paul, Dr. et al, Patentanwälte Dr. Paul Torggler DDr. Engelbert Hofinger Wilhelm-Grell-Strasse 16, A-6020 Innsbruck (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

### Beschreibung

Die Erfindung betrifft ein Getriebe zur stufenlos veränderbaren Übertragung einer Drehbewegung zwischen einer Antriebswelle und einer koaxialen Abtriebswelle, mit einem gehäusefesten, ersten konzentrischen Rad, das zwei erste Radkränze mit ersten kegeligen Übertragungsflächen aufweist, mit einem zweiten, auf der Abtriebswelle konzentrisch angeordneten Rad, das zwei zweite Radkränze mit zweiten, kegeligen Übertragungsflächen aufweist, wobei je ein Radkranz beider Räder axial unverschiebbar ist, und deren andere, gegeneinander verdrehbare Radkränze gemeinsam axial verschiebbar sind, und mit einem sowohl an den ersten als auch an den zweiten Übertragungsflächen abrollenden Ring, der auf einer mit der Antriebswelle sich drehenden und radial verschiebbaren Nabe drehbar gelagert ist, wobei die axiale Verschiebung der Radkränze und eine axiale Verschiebung eines die Nabe radial verschiebenden Mitnehmers durch einen auf einem gehäusefesten Gewinde verdrehbaren Stellring erfolgt.

Ein derartiges als Reibradgetriebe ausgebildetes Getriebe ist beispielsweise in der WO-A-80/02729 (Prioritätsdatum: 01.06.1979, internationales Veröffentlichungsdatum: 11.12.1980) beschrieben. Die Kraftübertragung erfolgt daher durch die gegenseitige Anpressung der Übertragungsflächen, die naturgemäss begrenzt ist und zur Übertragung grosser Drehmomente, insbesondere dann nicht ausreicht, wenn ihre Grösse sich sprunghaft ändert, d.h. wenn ungleichmässige Belastungen auftreten.

Die Erfindung hat es sich nun zur Aufgabe gestellt, ein Getriebe der eingangs genannten Art zu verbessern, um auch besonders grosse wechselnde Drehmomente übertragen zu können.

Erfindungsgemäss wird diese Aufgabe dadurch gelöst, dass alle kegeligen Übertragungsflächen der beiden Räder eine an sich bekannte Verzahnung aufweisen, die durch sich im wesentlichen radial erstreckende Nuten gebildet wird, zwischen denen Stege verlaufen, wobei die Nuten und Stege der beiden Übertragungsflächen jedes Rades alternierend einander gegenüberliegen, und dass im Ring zwei Kränze von in die Nuten der Übertragungsflächen eingreifenden Verzahnungselementen angeordnet sind, die jeweils aus einem Paket von einzeln achsparallel verschiebbaren Lamellen gebildet sind, von denen jede um die Tiefe einer Nur aus dem Ring vorsteht.

Die Kränze von Verzahnungselementen sind in den beiden die Kegelflächen aufweisenden Bereichen des Ringes angeordnet, in denen im Querschnitt quadratische bzw. rechteckige Durchbrechungen vorgesehen sind. Die zu den Verzahnungselementen paketierten Lamellen weisen eine trapezähnliche Form auf, wobei der Neigungswinkel der Lamellen dem der Kegelflächen entspricht und aus der langen Trapezseite in beiden Endbereichen Begrenzungsanschläge für die axiale Verschiebbarkeit der Lamelle vorstehen. Derartige Verzahnungen sind an sich bei stufenlos veränderbaren, parallelachsigen Keilscheibengetrieben mit einem endlosen, keilriemenartigen Transmissionselement bekannt (US-A-2 068 784, US-A-3 396 591).

Um einen störungsfreien Eingriff der Verzahnungselemente in die Nuten, sowohl beim Eintritt in die Übertragungsbereiche und beim Austritt aus den Übertragungsbereichen zu erzielen, ist in einer weiteren bevorzugten Ausführung vorgesehen, dass die Nuten in den Übertragungsflächen des gehäusefesten, ersten Rades zur Achse des Getriebes hin divergierend, und die Nuten in den Übertragungsflächen des sich mit der Abtriebswelle drehenden zweiten Rades zur Achse des Getriebes hin konvergierend ausgebildet sind.

In einer weiteren Ausführung der Erfindung ist vorgesehen, dass zur bewegungsschlüssigen Verbindung zwischen den axial verschiebbaren Radkränzen der beiden Räder und dem axial verschiebbaren, sich mit der Antriebswelle drehenden Mitnehmer sich zwischen dem axial verschiebbaren Radkranz des sich mit der Abtriebswelle drehenden zweiten Rades und einem dem Mitnehmer zugeordneten, relativ zu ihm drehbaren Ring Verbindungselemente radial erstrecken, die achsparallele Schlitze verschiebbar durchsetzen, die im unverschiebbaren Radkranz des sich mit der Abtriebswelle drehenden zweiten Rades vorgesehen sind.

### Beschreibung der Zeichnungsfiguren

Nachstehend wird nun die Erfindung anhand der Figuren der beiliegenden Zeichnungen in mehreren Ausführungsbeispielen näher beschrieben, ohne darauf beschränkt zu sein.

Es zeigen:

Fig. 1 einen Längsschnitt durch ein erstes Ausführungsbeispiel;

Fig. 2 und 3 Schnitte nach den Linien II-II und III-III von Fig. 1;

Fig.4 vergrössert den Bereich A aus Fig. 1;

Fig. 5 einen Schnitt durch den Bereich A gemäss der Linie V-V von Fig. 4;

Fig. 6 einen Schnitt nach der Linie VI-VI der Fig. 5; und

Fig. 7 einen Längsschnitt durch ein weiteres Ausführungsbeispiel.

Das erfindungsgemässe Getriebe weist eine Antriebswelle 1 und eine dazu koaxiale Abtriebswelle 12 auf. Mit der Antriebswelle 1 ist eine Nabe 2 über einen Mitnehmer 27, 54 verdrehfest verbunden, jedoch in ihrer Exzentrizität und gegebenenfalls auch axial verstellbar angeordnet. Hiezu weist die Antriebswelle 1 im Bereich der Nabe 2 einen Vierkantabschnitt auf, der eine Ausnehmung der Nabe 2 mit gleicher Breite, jedoch grösserer Länge, durchdringt. Die Nabe 2 wird von einem Radialwälzlager 21 umgeben, auf dem eine gekröpfte Scheibe 3 drehbar gelagert ist. An der Scheibe 3 ist seitlich ein Ring 4 befestigt, der vier kegelige Übertragungsflächen 30, 31 aufweist und im Querschnitt konvex achteckig ausgebildet ist. Die beiden nach aussen gerichteten kegeligen Übertragungsflächen 30 greifen zwischen zwei Radkränze 7, 8 eines mit dem Gehäuse 5 verdrehfest verbundenen ersten, äusseren Rades 6 ein, wobei sie in einem Bereich mit nach innen gerichteten, kegeligen Übertragungsflächen 33 der Radkränze 7, 8 zusammenwirken. Der Radkranz 8 ist axial verschiebbar. Die beiden anderen, nach innen gerichteten kegeligen Übertragungsflächen 31 des Ringes 4 greifen in einem um 180° versetzten Bereich zwi-

2

schen zwei Radkränze 10, 11 eines zweiten, inneren Rades 9 ein, wobei sie in einem Bereich mit nach aussen gerichteten, kegeligen Übertragungsflächen 34 der Radkränze 10, 11 zusammenwirken. Der Radkranz 11 ist axial verschiebbar ausgebildet und auf einem gekröpften Teil des zweiten Rades 9 verdrehfest gelagert. Zwischen den beiden verschiebbaren Radkränzen 8, 11 ist ein Wälzlager 59, 78 angeordnet, so dass sie sich relativ zueinander drehen können und gemeinsam verschiebbar sind. Das zweite Rad 9 ist verdrehfest mit der Abtriebswelle 12 verbunden. Die Symmetrieebene sowohl beider Räder 6, 9 als auch des Ringes 4 liegen ineinandern, so dass Kippmomente nahezu ausgeschlossen werden.

Die exzentrische Anordnung des Ringes 4 bewirkt bei Drehen der Antriebswelle 1 eine oszillierende Bewegung des Ringes 4, dessen äussere Übertragungsflächen 30 sich an den Übertragungsflächen 33 der Radkränze 7, 8 des äusseren Rades 6 abwälzen. Gleichzeitig wälzen sich die inneren Übertragungsflächen 31 des Ringes 4 an den Übertragungsflächen 34 des Rades 9 ab. Dadurch bleibt die Masse der exzentrisch sich bewegenden Bauteile auf die Scheibe 3 mit dem Ring 4 beschränkt. Die Vergrösserung der Exzentrizität des Ringes 4 bewegt die Radkränze 7, 8 und 10, 11 auseinander, wobei eine geringfügige axiale Verschiebung des Ringes 4 stattfindet, und führt zu einer Verringerung des Untersetzungsverhältnisses, das abhängig von der Durchmesserdifferenz des äusseren Rades 6 und des Ringes 4 und umgekehrt proportional zur Exzentrizität ist. Die Verkleinerung der Exzentrizität führt daher zu einer Annäherung der jeweiligen Radkränze 7, 8 bzw. 10, 11 und vergrössert das Untersetzungsverhältnis. Im Extremfall ist die Exzentrizität Null, so dass die Nabe 2 exakt zentrisch auf der Antriebswelle 1 angeordnet ist und im Radialwälzlager 21 frei durchläuft. Das Untersetzungsverhältnis ist in diesem Falle unendlich.

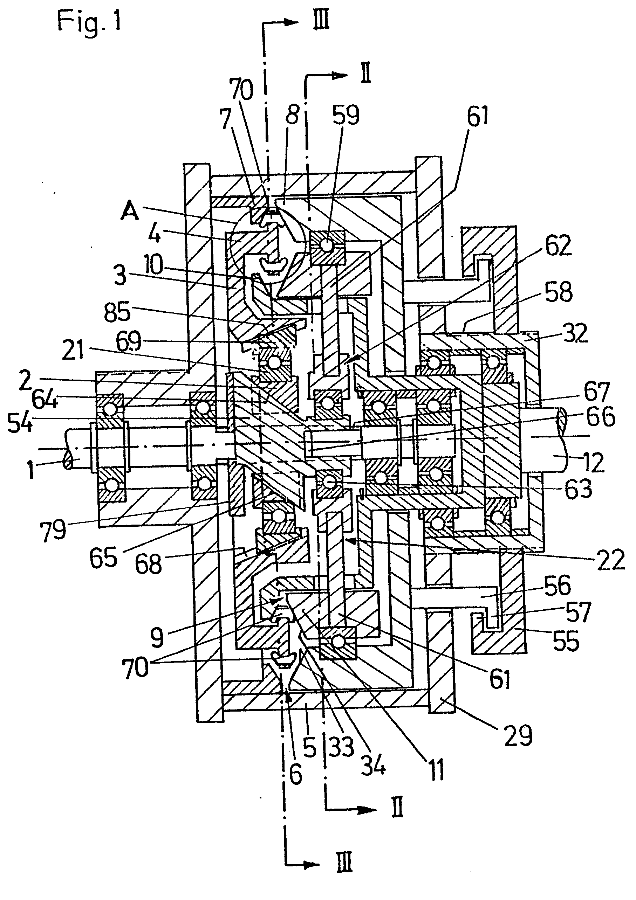

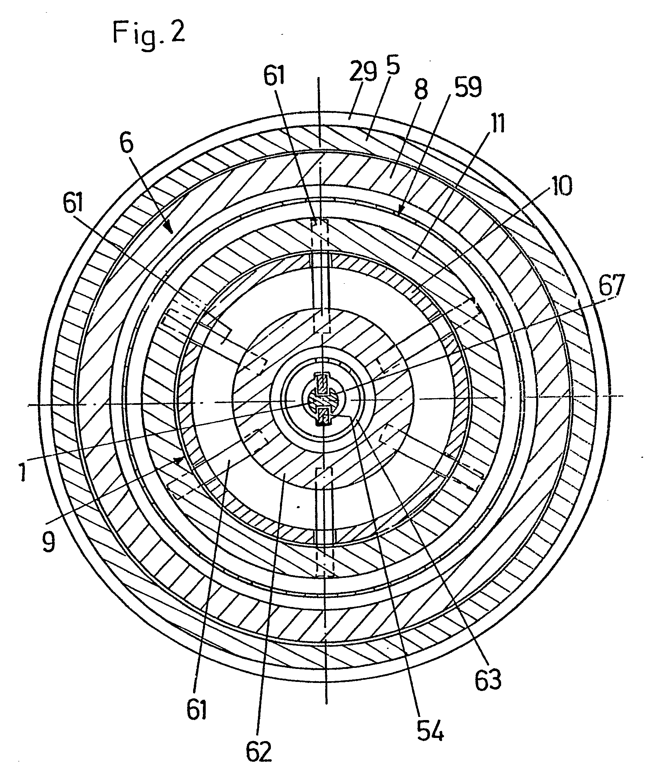

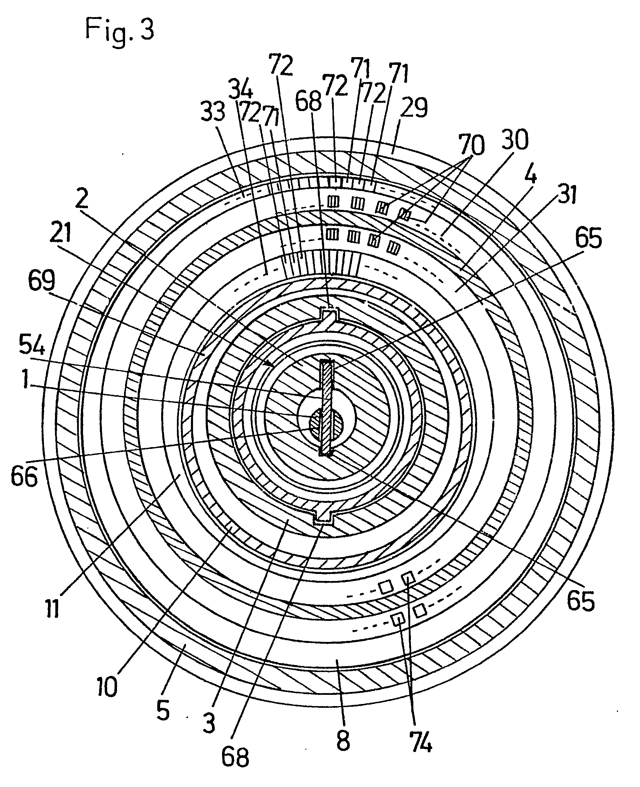

In der in Fig. 1 gezeigten Darstellung erfolgt sowohl die Verstellung der Exzentrizität des Ringes 4 als auch die axiale Verschiebung der Radkränze 8 und 11 der Räder 6, 9 jeweils in beiden Richtungen zwangsläufig durch eine gemeinsame Verstelleinrichtung. Diese weist einen Stellring 55, der auf einem Gewinde 58 eines axialen Gehäusefortsatzes 32 verdrehbar ist, auf. Ein Flansch 57 des Stellringes 55 hintergreift hakenförmige Zwischenglieder 56, die sich axial durch die Seitenwand 29 des Gehäuses erstrecken und mit dem verschiebbaren Radkranz 8 des ersten konzentrischen Rades 6 verbunden sind. Wie auch aus Fig. 2 ersichtlich, ist ein in axialer Richtung belastbares Wälzlager 59, beispielsweise ein Radialrillenkugellager, einerseits im verschiebbaren Radkranz 8 des ersten Rades 6 und andererseits im verschiebbaren Radkranz 11 des zweiten, sich mit der Abtriebswelle 12 drehenden Rades 9 angeordnet. Vom Radkranz 11 des zweiten Rades 9 erstrecken sich radial Verbindungselemente 61 zu einem Ring 62, wobei die Verbindungselemente 61 einen sich axial erstreckenden Teil des unverschiebbaren Randkranzes 10 des zweiten Rades 9 durchsetzen, in dem entsprechende Schlitze 60 ausgebildet sind. Die Verbindungselemente 61 und der Ring 62 bilden zusammen ein Druckelement 22, das den verschiebbaren Mitnehmer 54 beaufschlagt. Durch die Verbindungselemente 61 wird daher eine verdrehfeste, jedoch axial verschiebbare Verbindung zwischen den Radkränzen 10 und 11 des zweiten Rades 9 erzielt. Dem Ring 62, der die Antriebswelle 1 umgibt, ist ein Teil eines weiteren axial belastbaren Wälzlagers 63, beispielsweise eines Radialrillenkugellagers zugeordnet, dessen zweiter Teil mit dem Mitnehmer 54 gekoppelt ist. Der Mitnehmer 54 ist in Nuten 67 der Antriebswelle 1 verschiebbar, die im Vierkantabschnitt im Bereich der Nabe 2 vorgesehen sind. Der flache Mitnehmer 54, der bevorzugt zweiteilig ausgebildet ist, durchsetzt weiters einen Schlitz 66 der Antriebswelle 1 und ist andernends durch einen mit ihm verbundenen Ring 79 verstärkt. Am Mitnehmer 54 sind zwei zueinander parallele Keilflächen 64 vorgesehen, die in Nuten 65 der Nabe 2 mit gegengleichen Keilflächen als Nutengrund eingreifen. Fig. 3 zeigt einen Schnitt durch das Getriebe in diesem Bereich. Die Nabe 2 ist bei Betätigung der Verstelleinrichtung, die die axiale Verschiebung des Mitnehmers 54 bewirkt, radial verschiebbar, und überträgt ihre radiale Bewegung über das Wälzlager 21 auf die Scheibe 3 und deren Ring 4. Da die Übertragungsflächen 30, 31, 33, 34 kegelig und die Radkränze 7 und 10 axial unverschiebbar sind, bewirkt die gekoppelte axiale Verschiebung der Radkränze 8 und 11 und die radiale Verschiebung der Nabe 2 gleichzeitig auch eine axiale Verschiebung des Ringes 4, die durch einen das Wälzlager 21 umgebenden Ring 69 ermöglicht wird, der die Nuten 68 der Scheibe 3 eingreifende Stege aufweist, um die relative Drehbewegung zwischen dem Ring 69 und der Scheibe 3 zu verhindern. Hiebei verlaufen die Nuten 68 nicht achsparallel, sondern sind ebenfalls zur Antriebswelle 1 geneigt, so dass die Böden der Nuten 68 und die Stege des Ringes 69 ebenfalls zueinander parallele Keilflächen 85 bilden. Der Winkel zwischen zwei Kreilflächen 64 und 85 entspricht dabei dem Winkel der Übertragungsflächen 33, 34 zur Getriebeachse.

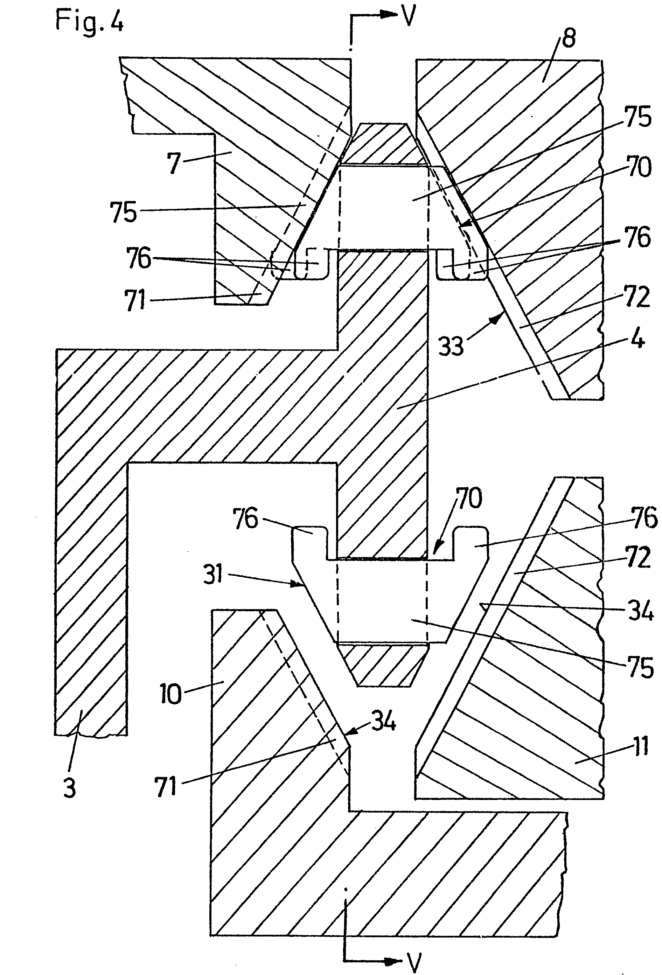

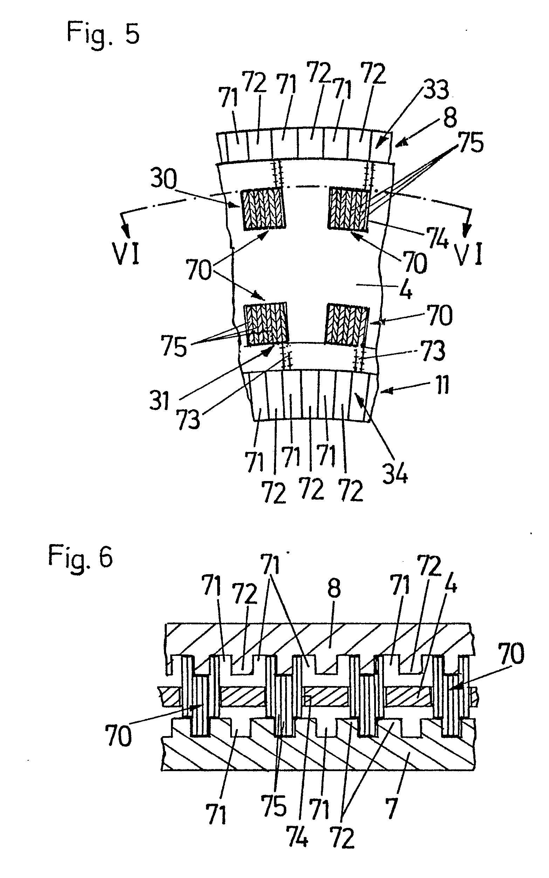

Zwischen den kegeligen Übertragungsflächen ist eine Verzahnung ausgebildet, die nachstehend anhand der Figuren 4 - 6 näher beschrieben wird. Im Ring 4 sind zwei Kränze von im Querschnitt rechteckigen oder quadratischen Durchtrittsöffnungen 74 vorgesehen (Fig. 3, 5), in denen als Verzahnungselemente 70 jeweils ein Paket von einzeln frei axial verschiebbaren Lamellen 75 eingesetzt sind. Die Lamellen 75 in Fig. 4 sind im wesentlichen trapezförmig, wobei die Seitenkanten einen Winkel zur Grundlinie einschliessen, der dem Winkel der Übertragungsflächen 33, 34 zur Getriebeachse entspricht. In den Übertragungsflächen 33, 34 sind Nuten 71 und zwischen diesen Stege 72 ausgebildet, die im wesentlichen radial verlaufen. Die Anzahl von Nuten 71 und Stegen 72 ist von untergeordneter Bedeutung; es ist jedoch wesentlich, dass jeweils einem Steg 72 in der einen Übertragungsfläche 33 bzw. 34 eine Nut 71 in der zweiten Übertragungsfläche 33 bzw. 34 desselben Rades 6 bzw. 9 gegenüberliegend ausgebildet ist. Jede Lamelle 75 des äusseren Kranzes von Verzahnungselementen 70 greift nun entweder in eine Nut 71 des axial unverschiebbaren Radkranzes 7 oder des axial verschiebbaren Radkranzes 8 ein (Fig. 6) und liegt mit der gegenüberliegenden Seite an der Oberseite eines Steges 72 an, da die Breite jeder Nut 71 zumindest der Breite eines Steges 72 entspricht, vorzugsweise jedoch geringfügig grösser ist. Ebenso ist dies bei den Lamellen 75 des inneren Kranzes von Verzahnungselementen 70 gegeben, die den Nuten 71 und Stegen 72 der Übertragungsflächen 34 der Radkränze 10, 11 des zweiten Rades 9 um 180° versetzt zugeordnet sind. Alle Nuten 71 in beiden Übertragungsflächen 33, 34 beider Räder 6, 9 können parallele Seitenwände aufweisen, bevorzugt divergieren sie jedoch in die Richtung des Ringes 4, um den Ein- und Ausgriff der Lamellenpakete in den Übertragungsbereichen zu verbessern, da die Radien 4 der Kränze von Verzahnungselementen 70 unterschiedlich von denen der Radkränze 7, 8, 10, 11 sind.

Bei der Abstandsänderung zwischen den Radkränze 7, 8 und 10, 11 werden die Lamellen 75 in den Nuten verschoben. Dabei weichen Lamellen 75, die aus einer Nut 71 eines Radkranzes gedrängt werden, in eine versetzt gegenüberliegende Nut 71 des zweiten Radkranzes aus. Hierdurch wird ein ständiger formschlüssiger Eingriff aller Verzahnungselemente trotz der radialen Verschiebung des Ringes 4 ermöglicht. Da die Lamellen 75 ausserhalb der Eingriffsbereiche in ihrer axialen freien Verschiebbarkeit nicht gehindert sind, sind an den Lamellen, jeweils in den Endbereichen ihrer längeren Seiten, Begrenzungsanschläge 76 vorgesehen, die zum Ring 4 weisend vorstehen. Zum Einsetzen der Lamellen 75 werden in den Ring 4 radiale Einschiebeschlitze 73 von den Ringstirnseiten her in jede Durchtrittsöffnung 74 eingeschnitten, die nach dem Einsetzen der Lamellen wieder verschlossen werden (Fig. 5). Dies ist ohne Schwächung des Getriebes möglich, da die Lamellen 75 radial zur Mitte des Ringes 4 hin, also zum Befestigungsbereich der Scheibe 3 hin, beansprucht werden.

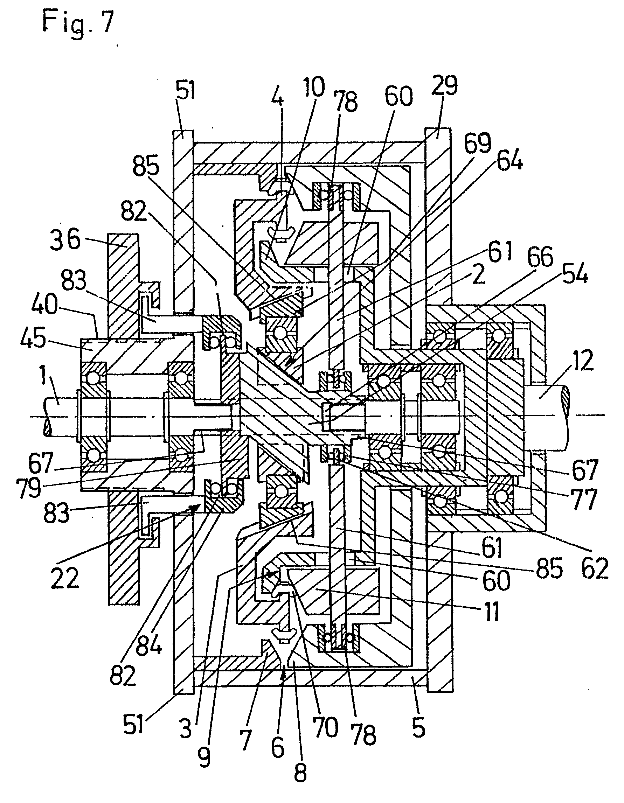

Fig. 7 zeigt noch ein weiteres Ausführungsbeispiel eines erfindungsgemässen Getriebes, bei dem die Verstelleinrichtung auf einem antriebswellenseitigen, axialen Gehäusefortsatz 45 angeordnet ist, der ein Gewinde 40 trägt. Ein Stellring 36 weist wiederum einen hakenartigen Zwischenglieder 83 hintergreifenden Flansch auf, und die Zwischenglieder 83, die die Gehäuseseitenwand 51 durchsetzen, sind an einem als Druckelement 22 dienenden Ring 84 befestigt, der ein zweiseitiges axiales Drucklager 82 einschliesst. In das Drucklager 82 greift eine in einer Nut 67 der Antriebswelle 1 verdrehfest gehaltene Scheibe 79 ein, die mit dem Mitnehmer 54 gehalten ist, der einen Schlitz 66 der Antriebswelle 1 durchsetzt und zwei zueinander parallele Keilflächen 64 aufweist. An der anderen Seite des Mitnehmers 54 ist ein weiteres, axiales Drucklager 77 angeordnet, dem radial abstehende Verbindungselemente 61 speicherartig zugeordnet sind. Die Verbindungselemente 61 durchsetzen Schlitze 60 im feststehenden Radkranz 10 des zweiten Rades 9 sowie Bohrungen im verschiebbaren Radkranz 11 des zweiten Rades 9 und enden in einem weiteren, axialen Drucklager 78, das im verschiebbaren Radkranz 8 des ersten, gehäusefesten Rades 6 eingesetzt ist. Die Betätigung des Stellringes 36 verschiebt wiederum die auf den Keilflächen geführte Nabe 2 radial und beide verschiebbaren Radkränze 10, 11 gemeinsam axial. Der übrige Aufbau des Getriebes hinsichtlich Anordnung und Ausbildung des Ringes 4 entspricht der Ausführung nach Fig. 1.

Das erfindungsgemässe Getriebe weist ein stufenlos veränderbares Untersetzungsverhältnis bei koaxialer An- und Abtriebswelle und besonders raumsparender Konstruktion auf und ist dank der indirekten Kraftübertragung über den Ring 4 auch für hohe Drehmomente und ungleichmässige Belastungen besonders geeignet. Die unendliche Untersetzung erübrigt eine zusätzliche Kupplung und bewirkt eine besondere Schonung des Antriebes.

**Patentansprüche**

1. Getriebe zur stufenlos veränderbaren Übertragung einer Drehbewegung zwischen einer Antriebswelle (1) und einer koaxialen Abtriebswelle (12), mit einem gehäusefesten, ersten konzentrischen Rad (6), das zwei erste Radkränze (7, 8) mit ersten kegeligen Übertragungsflächen (33) aufweist, mit einem zweiten, auf der Abtriebswelle (12) konzentrisch angeordneten Rad (9), das zwei zweite Radkränze (10, 11) mit zweiten, kegeligen Übertragungsflächen (34) aufweist, wobei je ein Radkranz (7, 10) beider Räder (6, 9) axial unverschiebbar ist, und deren andere, gegeneinander verdrehbare Radkränze (8, 11) gemeinsam axial verschiebbar sind, und mit einem sowohl an den ersten als auch an den zweiten Übertragungsflächen (33,34) abrollenden Ring (4), der auf einer mit der Antriebswelle (1) sich drehenden und radial verschiebbaren Nabe (2) drehbar gelagert ist, wobei die axiale Verschiebung der Radkränze (8, 11) und eine axiale Verschiebung eines die Nabe (2) radial verschiebenden Mitnehmers (54) durch einen auf einem gehäusefesten Gewinde (58) verdrehbaren Stellring (55; 36) erfolgt, dadurch gekennzeichnet, dass alle kegeligen Übertragungsflächen (33,34) der beiden Räder (6, 9) eine an sich bekannte Verzahnung aufweisen, die durch sich im wesentlichen radial erstreckende Nuten (71) gebildet wird, zwischen denen Stege (72) verlaufen, wobei die Nuten (71) und Stege (72) der beiden Übertragungsflächen (33, 34) jedes Rades (6, 9) alternierend einander gegenüberliegen, und dass im Ring (4) zwei Kränze von in die Nuten (71) der Übertragungsflächen (33, 34) eingreifenden Verzahnungselementen (70) angeordnet sind, die jeweils aus einem Paket von einzeln achsparallel verschiebbaren Lamellen (75) gebildet sind, von denen jede um die Tiefe einer Nut (71) aus dem Ring (4) vorsteht.

2. Getriebe nach Anspruch 1, dadurch gekennzeichnet, dass die Nuten (71) in den Übertragungsflächen (33) des gehäusefesten, ersten Rades (6) zur Achse des Getriebes hin divergierend, und die Nuten (71) in den Übertragungsflächen (34) des sich mit der Abtriebswelle (12) drehenden zweiten Rades (9) zur Achse des Getriebes hin konvergierend ausgebildet sind.

3. Getriebe nach Anspruch 1 oder 2, dadurch gekennzeichnet, dass zur bewegungsschlüssigen Verbindung zwischen den axial verschiebbaren Radkränzen (8, 11) der beiden Räder (6, 9) und dem axial verschiebbaren, sich mit der Antriebswelle(1) drehenden Mitnehmer (54) sich zwischen den axial verschiebbaren Radkranz (11) des sich mit der Abtriebswelle (12) drehenden zweiten Rades (9) und einen dem Mitnehmer (54) zugeordneten, relativ zu ihm drehbaren Ring (62) Verbindungselemente (61) radial erstrecken, die achsparallele Schlitze (60) verschiebbar durchsetzen, die im unverschiebbaren Radkranz (10) des sich mit der Abtriebswelle(12) drehenden zweiten Rades (9) vorgesehen sind.

4. Getriebe nach Anspruch 3, dadurch gekennzeichnet, dass der Stellring (36, 55) über ein auf der Antriebswelle (1) drehbar angeordnetes Druckelement (22) den sich mit der Antriebswelle (1) drehenden Mitnehmer (54) axial beaufschlagt, wobei zwischen dem Druckelement (22) und dem Mitnehmer (54) ein Wälzlager (63, 82) vorgesehen ist.

5. Getriebe nach Anspruch 3 und 4, bei denen der Stellring (55) den axial verschiebbaren Radkranz des gehäusefesten ersten Rades beaufschlagt, der über ein Wälzlager am axial verschiebbaren Radkranz des sich mit der Abtriebswelle drehenden zweiten Rades abgestützt ist, dadurch gekennzeichnet, dass das Druckelement (22) durch den am Mitnehmer (54) drehbaren Ring (62) und die radial erstreckenden Verbindungselemente (61) gebildet ist.

**Claims**

1. Mechanism for the continuously adjustable transmission of a rotary motion between an input shaft (1) and a coaxial output shaft (12), comprising a first concentric wheel (6) integral with the casing and having two first wheel rims (7, 8) with first conical transmission surfaces (33), comprising a second wheel (9) concentrically arranged on the output shaft (12) and having two second wheel rims (10, 11) with second conical transmission surfaces (34), one wheel rim (7, 10), each, of both wheels (6, 9) being axially undisplaceable, und their other wheel rims (8, 11) rotatable in respect of one another being jointly axially displaceable, and comprising a ring (4) rolling at the first as well as at the second transmission surfaces (33, 34) and rotatably mounted on a hub (2) rotating with the input shaft (1) and being axially displaceable, the axial displacement of the wheel rims (8, 11) and an axial displacement of a driving member (54) radially displacing the hub (2) being effected by an adjustment ring (55; 36) turnable on a thread (58) integral with the casing, characterized in that all conical transmission surfaces (33, 34) of the two wheels (6, 9) have a toothing known per se which is formed by substantially radially running grooves (71) between which ribs (72) extend, the grooves (71) and the ribs (72) of the two transmission surfaces (33, 34) of each wheel (6, 9) lying alternately opposite one another, and that in the ring (4) two rims of toothing elements (70) meshing with the grooves (71) of the transmission surfaces (33, 34) are arranged, each being formed by a set of lamellas (75) individually displaceable parallel to the axis and each of them projecting from the ring (4) by the depth of one groove (7).

2. Mechanism according to claim 1, characterized in that the grooves (71) in the transmission surfaces (33) of the first wheel (6) integral with the casing are adapted to diverge towards the axis of the mechanism, and that the grooves (71) in the transmission surfaces (34) of the second wheel (9) rotatable with the output shaft (12) are adapted to converge towards the axis of the mechanism.

3. Mechanism according to claim 1 or 2, characterized in that for the moving connection between the axially displaceable wheel rims (8, 11) of the wheels (6, 9) and the axially displaceable driving member (54) rorating with the input shaft (1)), connecting members (61) extend radially between the axially displaceable wheel rim (11) of the second wheel (9) rotating with the output shaft (12) and a ring (62) associated with the driving member (54) and relatively rotatable thereto, said connecting members displaceably extending through slots (60) parallel to the axis and arranged in the undisplaceable wheel rim (10) of the second wheel (9) rotating with the output shaft (12).

4. Mechanism according to claim 3, characterized in that adjustment ring (36, 55) axially acts upon the driving member (54) rotating with the input shaft (1) by means of a pressure member (22) rotatably arranged on the input shaft (1), a rolling bearing (63, 82) being provided between the pressure element (22) and the driving member (54).

5. Mechanism according to claims 3 and 4, in which the adjustment ring (55) acts upon the axially displaceable wheel rim of the first wheel integral with the casing, which rests on the axially displaceable wheel rim of the second wheel rotating with the output shaft by means of a rolling bearing, characterized in that the pressure member (22) is formed by the ring (62) rotatable at the driving member (54) and by radially extending connecting members (61).

**Revendications**

1. Mécanisme pour transmettre, d'une manière modifiable continûment, un mouvement de rotation entre un arbre d'entraînement (1) et un arbre mené coaxial (12), comportant une première roue concentrique (6) solidaire du carter et qui possède deux premières couronnes (7, 8) comportant des premières surfaces coniques de transmission (33), une seconde roue (9) disposée concentriquement sur l'arbre mené (12) et qui possède deux couronnes (10, 11) comportant deux surfaces coniques de transmission (34), des couronnes (7, 10) des deux roues (6, 9) étant déplaçables axialement et les autres couronnes (8, 11) ne tournant pas l'une par rapport à l'autre étant déplaçables axialement en commun, et comportant un anneau (4) roulant aussi bien sur les premières que sur les secondes surfaces de transmission (33, 34) et qui est monté de façon à pouvoir tourner sur un moyeu (2) déplaçable radialement et tournant avec l'arbre d'entraînement (1), le déplacement axial des couronnes de roue (8, 11) et un déplacement axial d'un organe d'entraînement (54), déplaçant le moyeu (2) radialement, s'effectuant à l'aide d'une bague de réglage (55; 36) pouvant tourner sur un filetage (58) solidaire du carter, caractérisé en ce que toutes les surfaces coniques de transmission (33, 34) des deux roues (6, 9) comportent une denture connue en soi qui est formée par des rainures (71) s'étendant essentiellement radialement et entre lesquelles s'étendent des nervures (72), les rainures (71) et les nervures (72) des deux surfaces de transmission (33, 34) de chaque roue (6, 9) étant disposées réciproquement en vis-à-vis de façon alternée, et que sur l'anneau (4) se trouvent disposées deux couronnes d'éléments de denture (70) s'engageant dans les rainures (71) des surfaces de transmission (33, 34) et qui sont formés respectivement par un paquet de lamelles (75) déplaçables individuellement parallèlement à l'axe et dont chacune fait saillie hors de l'anneau (4), sur une distance égale à la profondeur d'une rainure (71).

2. Mécanisme suivant la revendication 1, caractérisé en ce que les rainures (71) situées dans les surfaces de transmission (33) de la première roue (6) solidaire du carter sont réalisées de manière à diverger par rapport à l'axe du mécanisme et que les rainures (71) situées dans les surfaces de transmission (34) de la seconde roue (9) tournant avec l'arbre mené (12) sont réalisées de manière à converger par rapport à l'axe du mécanisme.

3. Mécanisme suivant la revendication 1 ou 2, caractérisé en ce que pour la liaison en déplacement entre les couronnes (8, 11), déplaçables axialement, des deux roues (6, 9) et l'organe d'entraînement (54) déplaçable axialement et tournant avec l'arbre d'entraînement (1), des organes de liaison (61), qui traversent avec possibilité de déplacement des fentes (60) parallèles à l'axe et qui sont prévus dans la couronne (10) non déplaçable de la seconde roue (9) tournant avec l'arbre mené, s'étendent radialement entre la couronne (11), déplaçable axialement, de la seconde roue (9) tournant avec l'arbre mené et un anneau (62) associé à l'organe d'entraînement (54) et pouvant tourner par rapport à ce dernier.

4. Mécanisme selon la revendication 3, caractérisé en ce que la bague de réglage (36, 55) charge axialement, par l'intermédiaire d'un organe de pression (22) monté de façon à pourvoir tourner sur l'arbre d'entraînement (1), l'organe d'entraînement (54) tournant avec l'arbre d'entraînement (1), tandis qu'un palier à roulements (63, 82) est prévu entre l'organe de pression (22) et l'organe d'entraînement (54).

5. Mécanisme selon les revendications 3 et 4, dans lequel la bague de réglage (55) charge la couronne déplaçable axialement de la première roue solidaire du carter et qui prend appui par l'intermédiaire d'un palier à roulements sur la couronne déplaçable axialement de la seconde roue tournant avec l'arbre mené, caractérisé en ce que l'organe de pression (22) est réalisé par un anneau (62) tournant sur l'organe d'entraînement (54) et par les organes de liaison (61) s'étendant radialement.

Fig. 1

Fig. 2

Fig. 3

Fig. 4

Fig. 5

Fig. 6

Fig. 7